# EUROPÄISCHE PATENTSCHRIFT

(11) **EP 2 386 231 B1**
(45) Veröffentlichungstag und Bekanntmachung des Hinweises auf die Patenterteilung: **11.06.2014**
(21) Anmeldenummer: 11162462.3
(22) Anmeldetag: 14.04.2011
(51) Int. Cl.: A47J 36/08

(54) **Abseihvorrichtung**
Strainer
Passoire

(30) Priorität: 10.05.2010 CH 7172010
(43) Veröffentlichungstag der Anmeldung: 16.11.2011
(73) Patentinhaber: MOHA Moderne Haushaltwaren AG, 1214 Vernier (CH)
(72) Erfinder: Greiner, Ulrich, 89123 Neu-Ulm (DE)
(74) Vertreter: Schneider Feldmann AG Patent- und Markenanwälte

(56) Entgegenhaltungen:
- US-A- 2 499 016
- US-A- 4 125 065
- US-A- 4 220 534

## Beschreibung

### Technisches Gebiet

Die vorliegende Erfindung beschreibt eine auf einem Ausguss eines Behälters lagerbare Abseihvorrichtung, welche Befestigungsmittel an einer dem Behälter zuwendbaren Unterseite aufweist, die mit einem Ausgussrand unterschiedlich grosser Behälter wirkverbindbar gestaltet sind.

### Stand der Technik

Abseihvorrichtungen bevorzugt für Kochgefässe sind seit langem bekannt und sind in den unterschiedlichsten Formen erhältlich. Mittels Abseihvorrichtung sind in einer Flüssigkeit befindliche Lebensmittel von der Flüssigkeit trennbar, wobei die Lebensmittel in der siebähnlichen Abseihvorrichtung zurückgehalten werden.

Um Verbrühungen zu vermeiden muss gewährleistet werden, dass die Abseihvorrichtung während des Ausleerens nicht vom Behälter rutscht. Um dies zu erreichen, wurde eine Abseihvorrichtung wie in der DE8231777 offenbart eingeführt, wobei die Abseihvorrichtung fest in den Deckel eines Topfes integriert ist und mit einem Teil des Deckels klappenartig verschlossen ist.

Einen anderen Weg geht die aus der EP0785743 bekannte Abseihvorrichtung, welche eine Abseihvorrichtung in Form eines bauchigen starren Siebes offenbart, welches auf einer ebenen Oberfläche abstellbar ist, sodass das Feststoff/Flüssigkeitsgemisch in das bauchige Sieb einfüllbar ist. Durch eine Mehrzahl von Öffnungen kann die abzuseihende Flüssigkeit das Sieb verlassen, sodass die festen Lebensmittel im Sieb zur weiteren Verwendung verbleiben. Bei Verwendung einer Abseihvorrichtung gemäss EP0785743 soll und kann die abgeseihte Flüssigkeit in der Regel nicht weiterverwendet werden, da diese aus dem Sieb üblicherweise in das Spülbecken entweicht. Denkbar wäre das Sieb in einen grossen Behälter zu stellen und das Feststoff/Flüssigkeitsgemisch durch das Sieb innerhalb des Behälters zu sieben. Nach dem Abseihvorgang müssen die abgeseihten Feststoffe aus dem Sieb in einen weiteren Behälter oder in den ausgeleerten Topf zurück geführt werden. Diese Vorgehensweise ist damit äusserst unpraktisch, da das Abseihgut nicht ohne den Verble i b im Ausgangsbehälter abseihbar ist.

Eine weitere Abseihvorrichtung gemäss US6789683 für Kochtöpfe von Campingkochern ist auf eine Mehrzahl von unterschiedlich grossen Töpfen aufsetzbar und kann mittels Haltemitteln vor dem Abseihen gesichert werden. Durch Aussparungen in der Abseihvorrichtung kann die Flüssigkeit aus dem Topf abgeseiht werden, wobei der Ausgussrand des Behälters teilweise in einer dafür vorgesehenen Ringnut in der Abseihvorrichtung lagert. Da die beschriebene Abseihvorrichtung den gesamten Ausguss abdeckt, ist diese Abseihvorrichtung entsprechend gross ausgeführt. Die beschriebene Befestigung der Abseihvorrichtung mit einer den Behälter vollständig umlaufenden Schlaufe, welche auf unterschiedliche Weise befestigbar ist, ist unpraktisch und nur für bestimmte Töpfe einsetzbar.

Das deutsche Gebrauchsmuster DE7730940 beschreibt eine Abseihvorrichtung, insbesondere für Kochgefässe, welche deckelartig ausgebildet ist, eine Mehrzahl von Durchbrechungen aufweist und auf einem Ausguss eines Behälters platzierbar und dort lösbar befestigbar ist. Mittels Hakenelementen an der dem Ausguss zugewandten Seite der Abseihvorrichtung ist die Abseihvorrichtung in einen Ausgussrand des Ausgusses einhakbar, wobei ein Spannelement die Lagerung auf dem Ausgussrand gegen eine Federspannung bewerkstelligt. Diese Abseihvorrichtung kann bei mehreren Töpfen unterschiedlichen Umfangs eingesetzt werden, wobei die Haken entsprechend in den Ausgussrand eingehakt werden. Die stabile Abseihvorrichtung weist unveränderliche Durchbrechungen auf und muss mittels Feder auf dem Ausguss des Behälters derart befestigt werden, dass die abzuseihende Flüssigkeit die Durchbrechungen passieren kann, ohne dass die Abseihvorrichtung bzw. das Spannelement gelöst werden. Ist der Kochtopf im Durchmesser grösser als der Durchmesser des Randbereiches der Abseihvorrichtung, so hält sich diese nur an den Ecken. Ist der Durchmesser das Ausgusses des Behälters wesentlich kleiner als der Durchmesser des Randbereiches der Abseihvorrichtung so hält sie sich nur noch fast punktuell. Bei häufigem Gebrauch ist es möglich, dass die beweglichen Bauteile leiden und die Federkraft nachlässt, wodurch die Befestigungsmöglichkeit nicht mehr ausreicht.

Aus der US2499016 geht eine Abseihvorrichtung hervor, welche auf Behältern mit unterschiedlich grossen Ausgussrändern lösbar befestigbar ist. Die Abseihvorrichtung umfasst eine flexibles Blech mit an einer Unterseite angeformten Befestigungsmitteln, womit das flexible Blech an Ausgussrändem befestigbar ist. Eine starre Ausgussscheibe mit einer Mehrzahl von Schlitzen, welche eine Mehrzahl von Siebelementen bildet, ist in einem Schlitz innerhalb des flexiblen Bleches gehalten. Ein elastisches Element, welches aus einer Feder gebildet ist, gewährleistet eine Verschwenkbarkeit der Ausgussscheibe. Die Ausgussscheibe kann je nach Krümmung des flexiblen Bleches unterschiedlich tief in den Schlitz eintauchen.

Diese Abseihvorrichtung gemäss US2499016 ist mehrteilig ausgestaltet, wobei das flexible Blech und die Ausgussscheibe aufgrund der elastischen Kopplung mittels elastischem Element zusammenwirken. Dieser mehrteilige Aufbau verkompliziert und verteuert die Herstellung der Abseihvorrichtung. Das elastische Element muss in der Ausgussscheibe und dem flexiblen Blech ausreichend gut befestigt sein, sodass zum Beispiel beim Reinigen der Abseihvorrichtung das elastische Element nicht verloren geht. Auch die Lagerung der Abseihvorrichtung ist aufgrund der Mehrteiligkeit platzraubender, da die Ausgussscheibe nur bedingt etwa parallel zum flexiblen Blech bei starker Auslenkung des elastischen Elementes aufgrund der Befestigungsmittel auf der Unterseite des flexiblen Bleches anordbar ist. Die minimal erreichbare Höhe der Abseihvorrichtung ist durch das schichtartige Zusammenlegen der Bauteile definiert.

### Darstellung der Erfindung

Die vorliegende Erfindung hat sich zur Aufgabe gestellt eine Abseihvorrichtung bzw. ein Abgiesssieb zu schaffen, welches auf Behälter unterschiedlicher Ausgussdurchmesser vereinfacht anpassbar ist, um so eine verbesserte Halterung bei verschiedenen Durchmessergrössen von Behältern zu erzielen. Eine reproduzierbare lösbare Befestigung der Abseihvorrichtung auf dem Ausguss ist erreichbar, wobei sich die Abseihvorrichtung während der Befestigung eigenständig dem Ausgussumfang anpasst. Bei Verwendung einer Spannvorrichtung zur Befestigung der Abseihvorrichtung, kann auf sich gegeneinander bewegende Bauteile an der Abseihvorrichtung und gegebenenfalls an der Spannvorrichtung zur Befestigung der Abseihvorrichtung am Ausgussrand des Behälters verzichtet werden. Mittels der Abseihvorrichtung kann das Abseihgut während des Abseihens im Behälter verbleiben.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.
- Figur 1a: zeigt eine perspektivische Ansicht einer Abseihvorrichtung beispielhaft auf einem Behälter platziert, während
- Figur 1b: die Abseihvorrichtung in einer vergrösserten perspektivischen Ansicht allein zeigt.
- Figur 2: zeigt eine Aufsicht auf eine vollständig aus Kunststoff hergestellte Abseihvorrichtung.
- Figur 3: zeigt eine Ansicht von unten auf eine Abseihvorrichtung in Ausgangsstellung ohne Spannvorrichtung, wobei die Siebelementhalterung im Bereich des Aussenumfangs der Abseihvorrichtung liegt, während
- Figur 4: eine Ansicht von unten auf die Abseihvorrichtung im geweiteten Zustand.

### Beschreibung

Die hier beschriebene Abseihvorrichtung 1 kann auf einem Ausguss 30 eines Behälters 3 befestigt werden. Die Abseihvorrichtung 1 weist in der Benutzungslage eine dem Behälter 3 abgewandte Oberseite 13 und eine dem Behälter 3 zugewandte Unterseite 14 auf. An der Unterseite 14 sind Befestigungsmittel 12 angeformt oder befestigt, die zur Halterung am Ausgussrand 31 des Behälters 3 dienen. Der Behälter 3 kann insbesondere ein Kochtopf, eine Pfanne oder eine Schüssel sein.

Mittels einer optionalen Spannvorrichtung 2 kann die Abseihvorrichtung 1 lösbar auf dem Ausguss 30 gehalten werden. Wird keine Spannvorrichtung 2 verwendet, muss der Benutzer die Abseihvorrichtung 1 zur Lagesicherung mit einer Hand halten. Dazu können auch zusätzliche Haltemittel auf der Oberseite 13 vorgesehen sein, die das Halten erleichtern.

Die Abseihvorrichtung 1 umfasst eine elastisch verformbare Siebelementhalterung 15 mit einer Mehrzahl von Siebelementen 10. Jedes Siebelement 10 ist von den benachbarten Siebelementen 10 mittels Schlitzen 11 getrennt, sodass die Siebelemente 10 von einander beabstandet von der Siebelementhalterung 15 wegragend angeordnet sind und insgesamt eine kammartige Abseihvorrichtung 1 gebildet wird.

Die hier dargestellte Ausführungsform der Abseihvorrichtung 1 ist als Kreissegment ausgeführt, wobei die Befestigungsmittel 12 mindestens annähernd entlang eines Kreisbogens vorgesehen sind, welche in den Ausgussrand 31 zusammenwirkend eingreifen, womit die Abseihvorrichtung 1 am Ausgussrand 31 lösbar befestigbar ist. Die Ausgestaltung der Abseihvorrichtung 1 als Kreissegment ist aber nicht zwingend. Entscheidend ist, dass die Befestigungsmittel 12 derart angeordnet sind, dass sie mit dem Ausgussrand 31 zusammenwirken können, wobei die Siebelemente 10 auch über den Ausguss 30 hinausragen können.

Die Befestigungsmittel 12 sind im Bereich der Siebelementhalterung 15 auf der Unterseite 14 der Abseihvorrichtung 1 vorgesehen. Damit die Befestigungsmittel 12 in den Ausgussrand 31 des Behälters 3 eingreifen können, sind die Befestigungsmittel 12 bevorzugt entlang der Siebelementhalterung 15 an der Unterseite 14 verlaufend angeordnet. Die Befestigungsmittel 12 können dabei entweder fest angeformt oder unlösbar oder lösbar mit der Abseihvorrichtung 1 verbunden sein. Wahlweise kann ein einzelnes Befestigungsmittel 12 am gesamten äusseren Umfang der Abseihvorrichtung 1 umlaufend befestigt sein. Die Befestigungsmittel 12 sind bevorzugt in Form von Haken ausgestaltet, welche in den Ausgussrand 31 einhakbar sind.

Die Siebelemente 10 können entweder an der Siebelementhalterung 15 fest angeformt sein oder mit der Siebelementhalterung 15 lösbar oder unlösbar verbunden sein. Es ist aber in jedem Fall vorgesehen, dass die Siebelemente 10 mindestens teilweise voneinander beabstandet an der Siebelementhalterung 15 schwenkbar angeordnet sind, sodass die Siebelemente 10 in einer Ebene parallel zur Fläche der Abseihvorrichtung 1 flexibel bewegbar sind. Durch diese flexible Ausgestaltung ist eine Benutzung der Abseihvorrichtung 1 auf Behältern 3 unterschiedlicher Ausgussgrössen möglich, wobei variable Schlitze 11 ausbildbar sind, welche sich je nach Grösse des Ausgusses 30 weiten. Von einer Ausgangsstellung an mit einer minimalen Schlitzgrösse können damit unterschiedlich grosse Behälter 3 mindestens teilweise überspannt werden.

Eine derartig gewünschte Flexibilität ist erreichbar, wenn die Siebelemente 10 und die Siebelementhalterung 15 aus Kunststoff oder Metall hergestellt sind. Wahlweise kann aber auch die Siebelementhalterung 15 aus Metall sein und die Mehrzahl der Siebelemente 10 aus einem Kunststoff hergestellt sein oder entsprechend umgekehrt. Aufgrund der flexiblen Anordnung der einzelnen Siebelemente 10 resultiert eine Abseihvorrichtung 1 mit flexiblem Kreisbogen und variierbaren Schlitzgrössen.

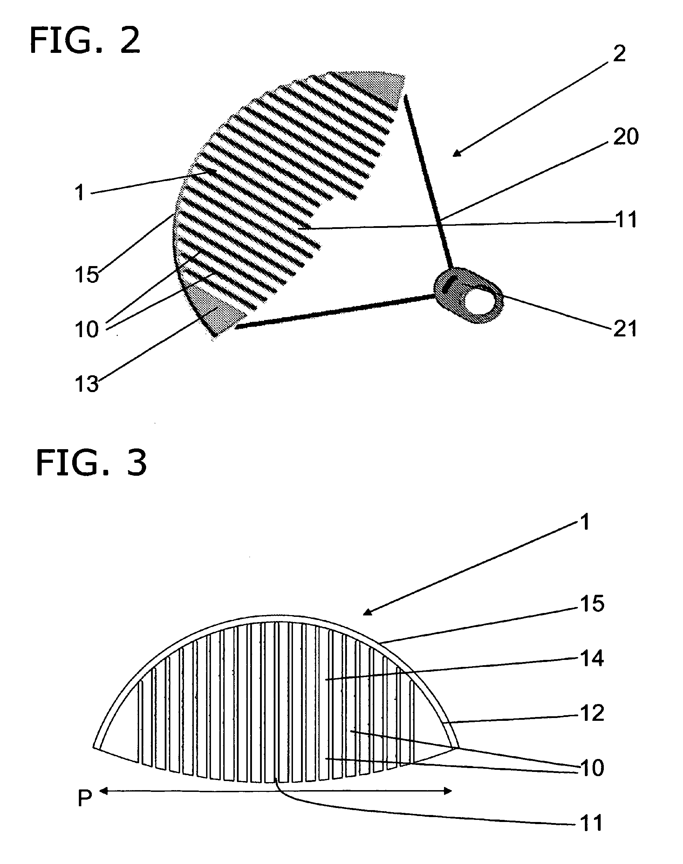

Je nachdem welchen Durchmesser bzw. Umfang der Ausguss 30 aufweist, wird die kammartige Abseihvorrichtung 1 nach der Auflage auf den Ausgussrand 31 aus einer Grundstellung (wie in Fig. 3 dargestellt) geweitet. Die Schlitze 11 werden dabei in die Richtung weg von der Siebelementhalterung 15 zum Zentrum des Ausguss 30 vergrössert und die Siebelemente 10 werden fächerartig aufgespreizt.

Damit nicht neben der abzuseihenden Flüssigkeit auch darin befindliche Lebensmittel durch die Abseihvorrichtung 1 ungewollt entweichen, darf eine maximale Ausgussgrösse und damit eine maximal erreichbare Schlitzgrösse nicht überschritten werden.

Die kammartige Abseihvorrichtung 1 kann sich in einem definierten Rahmen unterschiedlichen Ausgussgrössen unterschiedlicher Behälter 3 anpassen. Zur lösbaren Befestigung der Abseihvorrichtung 1 auf dem Ausguss 30 ist die Spannvorrichtung 2 vorgesehen. Der Benutzer kann den Behälter 3 dabei mit beiden Händen halten und das Abseihen vornehmen.

Mittels Griff 21 wird ein Spannmittel 20 über die Behältermitte bis zu dem, den Befestigungsmitteln 12 diametral gegenüberliegenden Ausgussrand des Ausgusses 30 gespannt. An der dem Behälter 3 zugewandten Seite des Griffes 21 befindliche Spanneinhakmittel 22 werden dann am Ausgussrand 31 einhakend lösbar befestigt. Als Spannmittel 20 kommen elastische Bänder und bevorzugt Gummizüge, beispielsweise aus Silikongummi zum Einsatz. Der Griff 21 kann aus Metall oder Kunststoff gefertigt sein.

Die Abseihvorrichtung 1 kann aber auch vom Benutzer mit einer Hand auf dem Ausgussrand 31 aufliegend gehalten werden, während die Flüssigkeit aus dem Behälter 3 abgeschüttet wird. In diesem Fall ist die Spannvorrichtung 2 nicht notwendig und die Abseihvorrichtung 1 wird durch Befestigungsmittel 12 und eine Hand des Benutzers lagefixiert.

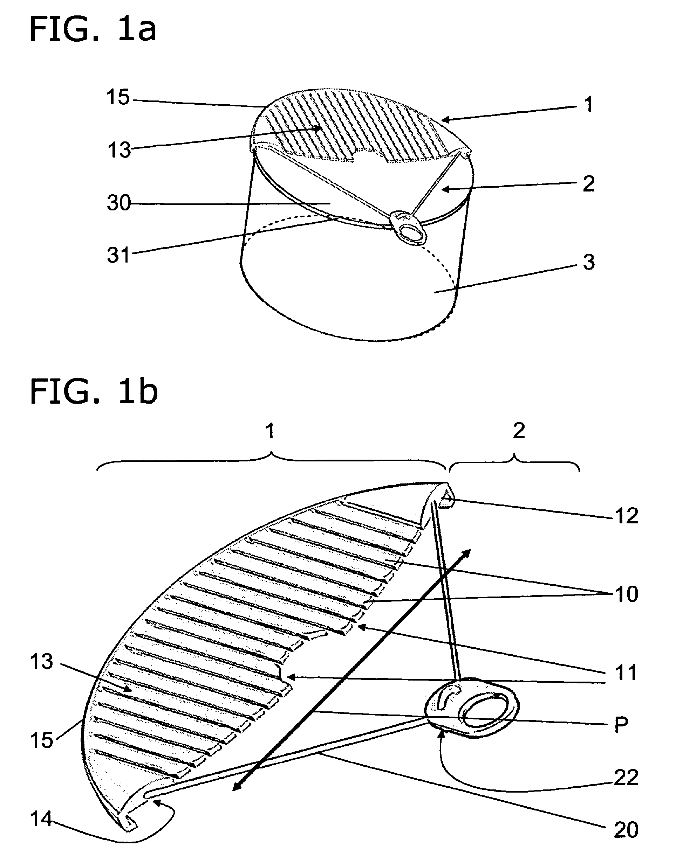

Die in den Figuren 1a, 1b und 2 gezeigten Siebelementhalterungen 15 sind an der dem Ausgussrand 31 zugewandten Seite der Abseihvorrichtung 1 angeordnet, sodass eine Aufspreizung der Siebelemente 10 gemäss dem Pfeil P in Figur 1b erfolgen kann.

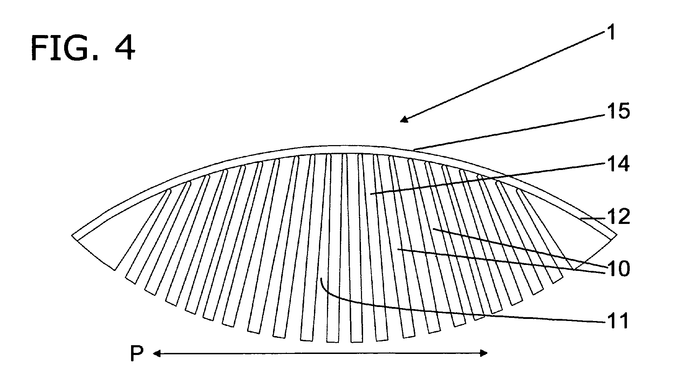

Die Aufspreizung findet vom Ausgussrand 31 in Richtung Behältermitte statt, wobei die Schlitze 11 entsprechend vom Aussenumfang der Abseihvorrichtung 1 beabstandet grössere Schlitzgrössen aufweisen. Eine Abseihvorrichtung 1 ist im geweiteten Zustand mit Aufspreizung in Figur 4 dargestellt.

Die Befestigungsmittel 12 auf der Unterseite 14 der Abseihvorrichtung 1 sind bevorzugt hakenförmig ausgeführt, sodass die Befestigungsmittel 12 unter den Ausgussrand 31 untergreifend mit dem Ausgussrand 31 zusammenwirken. In Figur 1b und Figur 3 ist das Befestigungsmittel 12 im Bereich der Siebelementhalterung 15 entlang des Aussenumfangs der Abseihvorrichtung 1 verlaufend einstückig angeordnet dargestellt. Damit sind Befestigungsmittel 12 und die Siebelementhalterung 15 den freien Enden der Siebelemente 10 gegenüberliegend angeordnet.

Die mit heissen Flüssigkeiten und/oder dem heissen Behälter 3 in Berührung kommenden Teile, beispielsweise die Siebelemente 10, die Siebelementhalterung 15 oder der Griff 21 sollten aus hitzebeständigen Kunststoffen, beispielsweise aus Polypropylen (PP), Silikon oder Acrylnitril-Butadien-Styrol-Copolymerisat (ABS) hergestellt sein.

Der Behälter 3 kann ein Kochgefäss, beispielsweise eine Pfanne oder ein Kochtopf zur Trennung von Kochgut und heisser Flüssigkeit, wie Wasser oder Öl sein. Die erfindungsgemässe Vorrichtung kann aber auch auf Behälter 3 wie Konservendosen oder Kunststoffbehälter aufgesetzt werden, wobei in einer Flüssigkeit gelagerte Lebensmittel, beispielsweise Pfirsiche, Mais und andere Festkörper von der Flüssigkeit trennbar sind, indem die Lebensmittel von der Abseihvorrichtung 1 im Behälter 3 zurückgehalten werden, während die Flüssigkeit ausgeschüttet wird.

### Bezugszeichenliste

- 1: Abseihvorrichtung
10 Siebelement
11 Schlitz
12 Befestigungsmittel
13 Oberseite (Behälter abgewandt)
14 Unterseite (Behälter zugewandt)
15 Siebelementhalterung
2 Spannvorrichtung
20 Spannmittel
21 Griff
22 Spanneinhakmittel
3 Behälter
30 Ausguss
31 Ausgussrand
P Aufspreizrichtung

## Patentansprüche

1. Auf einem Ausguss (30) eines Behälters (3) lagerbare Abseihvorrichtung (1), welche Befestigungsmittel (12) an einer dem Behälter (3) zuwendbaren Unterseite (14) aufweist, die mit einem Ausgussrand (31) unterschiedlich grosser Behälter (3) wirkverbindbar gestaltet sind, wobei
die Abseihvorrichtung (1)
eine Mehrzahl
von an einer elastisch verformbaren Siebelementhalterung (15) angeordneten
Siebelemente (10) umfasst, welche durch Schlitze (11) mindestens teilweise voneinander beabstandet sind,
**dadurch gekennzeichnet, dass**
durch eine von der Siebelementhalterung (15) wegragende Anordnung der Siebelemente (10) eine kammartige Abseihvorrichtung (1) erreicht ist,
wobei die Siebelemente (10) schwenkbar derart angeordnet sind, dass die Siebelemente (10) in einer Ebene parallel zur Fläche der Abseihvorrichtung (1) flexibel bewegbar sind, wodurch variierbare Schlitzgrössen bei variierbarer Aufspreizung der Siebelemente (10) erreichbar sind.

2. Abseihvorrichtung (1) gemäss Anspruch 1,
**dadurch gekennzeichnet, dass**
die Mehrzahl von Siebelementen (10) an der Siebelementhalterung (15) lösbar oder unlösbar befestigt oder angeformt ist.

3. Abseihvorrichtung (1) gemäss Anspruch 1,
**dadurch gekennzeichnet, dass**
die Siebelementhalterung (15) mindestens annähernd entlang des Aussenumfangs der Abseihvorrichtung (1) verläuft, in einer Ebene elastisch dehnbar ist und mittels der Befestigungsmittel (12) mit dem Ausgussrand (31) wirkverbunden ist.

4. Abseihvorrichtung (1) gemäss Anspruch 1,
**dadurch gekennzeichnet, dass**
die Befestigungsmittel (12) im Bereich des Aussenumfangs der Abseihvorrichtung (1) auf der Unterseite (14) der Abseihvorrichtung (1) angeordnet sind.

5. Abseihvorrichtung (1) gemäss Anspruch 4,
**dadurch gekennzeichnet, dass**
die Befestigungsmittel (12) entlang eines Kreisbogens angeordnet sind.

6. Abseihvorrichtung (1) gemäss einem der vorhergehenden Ansprüchen,
**dadurch gekennzeichnet, dass**
die Siebelementhalterung (15) aus einem Stahlblech oder aus einem hitzebeständigen Kunststoff, insbesondere aus Polypropylen, Silikon oder Acrylnitril-Butadien-Styrol-Copolymerisat hergestellt ist.

7. Abseihvorrichtung (1) gemäss einem der vorhergehenden Ansprüchen,
**dadurch gekennzeichnet, dass**
die Siebelemente (10) aus einem Stahlblech und/oder aus einem hitzebeständigen Kunststoff, insbesondere aus Polypropylen, Silikon oder Acrylnitril-Butadien-Styrol-Copolymerisat hergestellt sind.

8. Abseihvorrichtung (1) gemäss einem der vorhergehenden Ansprüche,
**dadurch gekennzeichnet, dass**
der Abseihvorrichtung (1) mit einer Spannvorrichtung (2) versehen ist, wobei die Abseihvorrichtung (1) mittels Spannmittel (20) und mit dem Ausgussrand (31) wirkverbindbaren Spanneinhakmitteln (22) lösbar am Ausguss (30) befestigbar ist.

9. Abseihvorrichtung (1) gemäss Anspruch 8,
**dadurch gekennzeichnet, dass**
die Spannmittel (20) elastische Bänder, insbesondere aus Silikon sind.

10. Abseihvorrichtung (1) gemäss Anspruch 8,
**dadurch gekennzeichnet, dass**
die Spannmittel (20) mit einem Griff (21) verbunden sind.

## Claims

1. A straining device (1) supportable on an outlet (30) of a container (3), which comprises fastening means (12) on an underside (14) which can be turned to face the container (3), the fastening means being designed so that they can be operatively connected with an outlet edge (31) of containers (3) of different sizes, wherein the straining device (1) comprises a plurality of straining elements (10) arranged on an elastically deformable straining element holder (15), which straining elements are at least partially spaced apart by slots (11), **characterised in that** due to the straining elements (10) being arranged so as to extend away from the straining element holder (15) a comb-like straining device (1) is obtained, wherein the straining elements (10) are pivotably arranged in such a way that the straining elements (10) are flexibly movable in a plane parallel to the surface of the straining device (1), wherein variable slot sizes are achievable for a variable spreading-apart of the straining elements (10).

2. The straining device (1) according to claim 1, **characterised in that** the plurality of straining elements (10) is detachably or non-detachably attached or moulded onto the straining element holder (15).

3. The straining device (1) according to claim 1, **characterised in that** the straining element holder (15) extends at least approximately along the outer circumference of the straining device (1), is elastically expandable in one plane and is operatively connected with the outlet edge (31) by means of the fastening means (12).

4. The straining device (1) according to claim 1, **characterised in that** the fastening means (12) are arranged in the area of the outer circumference of the straining device (1) on the underside (14) of the straining device (1).

5. The straining device (1) according to claim 4, **characterised in that** the fastening means (12) are arranged along an arc.

6. The straining device (1) according to one of the preceding claims, **characterised in that** straining element holder (15) is manufactured from steel sheet or a heat-resistant plastic, in particular from polypropylene, silicone or acrylonitrile butadiene styrene copolymer.

7. The straining device (1) according to one of the preceding claims, **characterised in that** the straining elements (10) are manufactured from steel sheet or a heat-resistant plastic, in particular from polypropylene, silicone or acrylonitrile butadiene styrene copolymer.

8. The straining device (1) according to one of the preceding claims, **characterised in that** the straining device (1) is provided with a tensioning device (2), wherein the straining device (1) can be detachably attached to the outlet (30) by means of the tensioning means (20) and by means for hooking into the tensioning means (22) which can be operatively connected with the outlet edge (31).

9. The straining device (1) according to claim 8, **characterised in that** the tensioning means (20) are elastic bands, in particular made from silicone.

10. The straining device (1) according to claim 8, **characterised in that** the tensioning means (20) are connected with a grip (21).

## Revendications

1. Dispositif de descente en rappel (1) pouvant être monté sur un bec verseur (30) d'un récipient (3), qui sur une face inférieure (14) pouvant être dirigée face au récipient (3) comporte des moyens de fixation (12) qui sont conçus pour pouvoir être amenés en liaison active avec un bord (31) de bec verseur de récipients (3) de différentes tailles, le dispositif de descente en rappel (1) comprenant une pluralité d'éléments tamiseurs placés sur un support (15) d'éléments tamiseurs élastiquement déformable, qui sont écartés au moins en partie les uns des autres par des encoches (11), **caractérisé en ce que**, par une disposition des éléments tamiseurs (10) saillant à partir du support (15) des éléments tamiseurs, il est obtenu un dispositif de descente en rappel (1) en forme de peigne, les éléments tamiseurs (10) étant placés de manière pivotante, de telle sorte que les éléments tamiseurs (10) soient mobiles de manière flexible dans le plan parallèle à la surface du dispositif de descente en rappel (1) ce qui permet d'obtenir des encoches de taille variable lors d'un déploiement variable des éléments tamiseurs (10).

2. Dispositif de descente en rappel (1) selon la revendication 1, **caractérisé en ce que** la pluralité d'éléments tamiseurs (10) est fixée de manière amovible ou inamovible ou rapportée par formage sur le support (15) d'éléments tamiseurs.

3. Dispositif de descente en rappel (1) selon la revendication 1, **caractérisé en ce que** le support (15) d'éléments tamiseurs s'étend au moins approximativement le long de la périphérie extérieure du dispositif de descente en rappel (1), **en ce qu'**il est élastiquement extensible dans un plan et **en ce qu'**il est en liaison active à l'aide des moyens de fixation (12) avec le bord (31) du bec verseur.

4. Dispositif de descente en rappel (1) selon la revendication 1, **caractérisé en ce que** les moyens de fixation (12) sont placés dans la zone de la périphérie extérieure du dispositif de descente en rappel (1), sur la face inférieure (14) du dispositif de descente en rappel (1).

5. Dispositif de descente en rappel (1) selon la revendication 4, **caractérisé en ce que** les moyens de fixation (12) sont placés le long d'un arc de cercle.

6. Dispositif de descente en rappel (1) selon l'une quelconque des revendications précédentes, **caractérisé en ce que** le support (15) d'éléments tamiseurs est fabriqué dans une tôle d'acier ou dans une matière plastique thermorésistante, notamment en polypropylène, en silicone ou dans un copolymère d'acrylonitrile-butadiène-styrène.

7. Dispositif de descente en rappel (1) selon l'une quelconque des revendications précédentes, **caractérisé en ce que** les éléments tamiseurs (10) sont fabriqués dans une tôle d'acier ou dans une matière plastique thermorésistante, notamment en polypropylène, en silicone ou dans un copolymère d'acrylonitrile-butadiène-styrène.

8. Dispositif de descente en rappel (1) selon l'une quelconque des revendications précédentes, **caractérisé en ce que** le dispositif de descente en rappel (1) est muni d'un dispositif de serrage (2), le dispositif de descente en rappel (1) pouvant être fixé de manière amovible sur le bec verseur (30) à l'aide de moyens de serrage (20) et à l'aide de moyens d'accrochage par serrage (22) qui peuvent être amenés en liaison active avec le bord (31) du bec verseur.

9. Dispositif de descente en rappel (1) selon la revendication 8, **caractérisé en ce que** les moyens de serrage (20) sont des bandes élastiques, notamment en silicone.

10. Dispositif de descente en rappel (1) selon la revendication 8, **caractérisé en ce que** les moyens de serrage (20) sont reliés à une poignée (21).
